# EUROPÄISCHE PATENTSCHRIFT

(11) **EP 1 232 946 B1**
(45) Veröffentlichungstag und Bekanntmachung des Hinweises auf die Patenterteilung: **02.05.2003**
(21) Anmeldenummer: 01103058.2
(22) Anmeldetag: 09.02.2001
(51) Int. Cl.: B65B 35/52, B65B 35/46, B65B 61/12

(54) **Verfahren und Vorrichtung zum Stapeln und Verpacken von Aufgussbeuteln, insbesondere zur Bereitung von Tee**
Method and apparatus for stacking and packaging diffusion bags, especially for making tea
Procédé et dispositif pour empiler et emballer des sachets pour infusion, notamment pour la préparation de thé

(43) Veröffentlichungstag der Anmeldung: 21.08.2002
(73) Patentinhaber: TEEPACK SPEZIALMASCHINEN GMBH & CO. KG, D-40667 Meerbusch (DE)
(72) Erfinder: Lohrey, Wilhelm, 40668 Meerbusch 3 (DE); Lambertz, Stefan, Dr., 50354 Hürth (DE); Groth, Wolfgang, 41844 Wegberg (DE)
(74) Vertreter: Stenger, Watzke & Ring Patentanwälte

(56) Entgegenhaltungen:
- EP-A- 0 962 390
- US-A- 3 445 980

## Beschreibung

Die vorliegende Erfindung betrifft ein Verfahren und eine Vorrichtung zum gruppenweisen Verpacken von Aufgußbeuteln, insbesondere zur Bereitung von Tee, die von einem Strang getrennt und mittels eines kontinuierlich umlaufenden, taschenartige Aufnahmen aufweisenden Fächerrades in einer vorgegebenen Anzahl zu einem Aufgußbeutelstapel zusammengestellt und in ein Verpackungsbehältnis eingeführt werden.

Aufgußbeutel sind in zahlreichen Ausführungen bekannt. Bei einer der bekannten Ausführungen werden auf einer Filterpapierbahn einzelne Substanzquanten einer auszulaugenden Substanz abgelegt und anschließend ein Schlauch gebildet, der durch Quersiegelungen in einzelne, allseitig geschlossene, jeweils ein Substanzquantum enthaltende Kammern unterteilt wird. Die Schlauchbildung erfolgt dabei durch überlappendes Falten der Filterpapierbahn und Verschließen mittels einer Längsnaht oder durch Zuführen einer weiteren Filterpapierbahn und Anbringen von zwei Längsnähten. Auf diese Art und Weise wird ein Kammerstrang ausgebildet, der aus aufeinanderfolgenden und zusammenhängenden sowie durch eine Quernaht jeweils geschlossenen und mindestens ein Substanzquantum enthaltenden Kammern besteht, wobei die Quernaht zugleich die hintere Naht der einen und die vordere Naht der nachfolgenden Kammer ist und eine zwischen den beiden Nähten liegende Perforation umfaßt, an der die Kammern im Verlauf des Verfahrens getrennt werden.

Es ist bekannt, in einer vorgegebenen Anzahl in einem Beutelstapel zusammengestellte Aufgußbeutel gruppenweise durch Einsetzen in Verpackungsbehältnisse, insbesondere Schachteln, zu verpacken und in Verkehr zu bringen. Neben der oben beispielhaft beschriebenen kontinuierlichen Herstellung der Aufgußbeutel, soll auch deren Verpackung voll automatisch erfolgen. Durch die Fließcharakteristik der in die Aufgußbeutel eingefüllten Substanzquanten sammeln sich diese vorzugsweise im jeweils in Bewegungsrichtung hinteren Bereich der Aufgußbeutel an, so daß der einzelne Aufgußbeutel über die Fläche gesehen eine unterschiedliche Dicke aufweist, insbesondere bei hoher Produktionsleistung im Bereich der Herstellung von 800 bis 1.500 Aufgußbeuteln pro Minute. Insgesamt ergibt sich damit ein Aufgußbeutelstapel mit unterschiedlich dichten und dicken Zonen, was dem grundsätzlichen Interesse an möglichst kleinen Verpackungsbehältnissen entgegensteht. Darüber hinaus muß eine zu dichte, gepreßte Anordnung der Aufgußbeutel in den Verpackungsbehältnissen vermieden werden, da diese ansonsten bei der Entnahme beschädigt werden können.

Aus der US 3 445 980 A sind ein Verfahren und. eine Vorrichtung bekannt,. durch die von einem kontinuierlichen Strang von Aufgußbeuteln die Aufgußbeutel mittels einer Schneidvorrichtung abgeschnitten und einem Aufnahmetaschen für die einzelnen Aufgußbeutel enthaltenden Rad zugeführt werden. Nach Abgabe der Aufgußbeutel vom Rad werden die einzelnen Aufgußbeutel auf einer horizontal und radial zum Rad verlaufenden Führung hintereinander liegend gestapelt, bevor sie zu einem Stapel mit vorgebbarer Anzahl zusammengefaßt und in einem Karton verpackt werden.

Mit den bekannten Verfahren und Vorrichtungen ist es nicht möglich, im Rahmen eines Stapelns und gruppenweisen Verpackens von Aufgußbeuteln bei hoher Produktionsgeschwindigkeit eine gleichzeitig gute Egalisierung und Verdichtung des in den Beuteln verpackten Tees zu erzielen und damit die Verringerung der Verpackungsgröße zu ermöglichen.

Der Erfindung liegt die **Aufgabe** zugrunde, ein Verfahren und eine Vorrichtung zum Stapeln und gruppenweisen Verpacken von Aufgußbeuteln der eingangs genannten Art dahingehend zu verbessern, daß bei hohen Produktionsleistungen eine gleichmäßige Verteilung und gute Verdichtung der in den Aufgußbeuteln abgefüllten Substanzquanten über die Gesamtfläche der Aufgußbeutel ohne Pressung ermöglicht wird. Dabei soll auch bei hohen Produktionsgeschwindigkeiten ein einfaches, zuverlässiges und insbesondere beschädigungsfreies Stapeln und Verpacken von Aufgußbeuteln geschaffen werden. Weiterhin soll mit der Erfindung eine technisch vereinfachte Vorrichtung zur Durchführung des Verfahrens bereitgestellt werden, die durch schonende Behandlung eine gleichmäßige Verteilung der Substanzquanten im Aufgußbeutel erzielt.

Bei dem Verfahren der eingangs genannten Art wird die Aufgabe erfindungsgemäß durch die Merkmale des Anspruchs 1 gelöst.

Mit der Erfindung wird die Bewegungsgeschwindigkeit der im Rahmen einer kontinuierlichen Herstellung hintereinander in Reihe in einem Strang ankommenden Aufgußbeutel durch Änderung der Anordnung der Aufgußbeutel zueinander reduziert, indem der Abstand der Aufgußbeutel durch ein überlappendes Anordnen verringert wird. Durch die überlappende Anordnung werden auf der Länge eines Aufgußbeutels wenigstens zwei Aufgußbeutel angeordnet. Die hiermit verbundene Abstandsreduzierung zwischen den Aufgußbeuteln bringt aufgrund der damit verbundenen Geschwindigkeitsreduzierung mit sich, daß die Aufgußbeutel ohne nennenswerte Erschütterung von der kontinuierlichen Herstellung zum Stapeln und gruppenweisen Verpacken übergeben werden.

Zum Separieren eines Aufgußbeutels vom Strang wird der zu separierende Aufgußbeutel nahe einer Perforation des Trägermaterials ergriffen und einer Beschleunigung in Bewegungsrichtung des Stranges unterzogen; durch diese Relativbewegung wird der Aufgußbeutel vom Strang abgetrennt. Zu diesem Zweck wird der ankommende Aufgußbeutel einem kontinuierlich umlaufenden Zangenrad zugeführt, welches mit relativ zum Rad bewegbaren Zangen zum Ergreifen des Aufgußbeutels versehen ist. Die Zangen sind hierbei in Umlaufrichtung des Rades schwenkbar und zum Erzeugen der Relativbewegung in Umlaufrichtung des Rades beschleunigbar. Die Beschleunigung der Zangen erfolgt vorteilhafterweise über eine Kurvensteuerung.

Zur Stapelbildung werden die separierten Aufgußbeutel auf dem äußeren Umfang des kontinuierlich umlaufenden, taschenartige Aufnahmen für die Aufgußbeutel aufweisenden Fächerrades abgelegt. Durch das Fächerrad wird die Anordnung der Aufgußbeutel zueinander derart geändert, daß der Abstand zwischen diesen und damit deren Bewegungsgeschwindigkeit verringert wird. Zum Anpassen der Geschwindigkeit der Aufgußbeutel vom zum Separieren eingesetzen Zangenrad zum Fächerrad wird die Zangenbewegung nach dem Beschleunigen rückgeführt und die Aufgußbeutelgeschwindigkeit verringert, vorzugsweise wiederum über eine Kurvensteuerung. Die Geschwindigkeitsanpassung erfolgt dabei derart, daß die Übergabe der Aufgußbeutel vom Zangenrad auf das Fächerrad ohne nennenswerte Erschütterung erfolgt, so daß eine gute Egalisierung und Verdichtung der in den Aufgußbeuteln verpackten Substanzquanten erhalten bleibt.

Ausgehend von der aus US 3 445 980 A bekannten Vorrichtung zum Stapeln und Verpacken von Aufgußbeuteln mit einem kontinuierlich umlaufenden Fächerrad, dem die vereinzelten Aufgußbeutel zugeführt und in einer radial zum Fächerrad verlaufenden Führung in Stapeln vorgegebener Anzahl hintereinander liegend mit einer Verpackung versehen werden, weist die erfindungsgemäße Vorrichtung die kennzeichnenden Merkmale des Anspruchs 7 auf.

Die Aufgußbeutel werden vorteilhafterweise in den taschenartigen Aufnahmen des Fächerrades durch Ansaugung gehalten. Dadurch wird eine weitere Vergleichmäßigung der in den Aufgußbeuteln enthaltenen Substanzquanten erzielt und gleichzeitig werden die Aufgußbeutel sicher gehalten.

Die Aufgußbeutel werden durch das Fächerrad an einer seitlich des Fächerrades angeordneten Schienenablage vorbeigeführt, mittels welcher die Aufgußbeutel automatisch aus den Aufnahmen des Fächerrades mit definiertem Abstand zueinander entnommen und in einem Schacht gestapelt werden. Die mit der Schienenablage aus den Aufnahmen des Fächerrades entnommenen Aufgußbeutel werden vorteilhafterweise mittels im Bereich der Längsseiten des Aufgußbeutels angeordneter Transportschnecken in dem Schacht gestapelt. Dabei dienen die Transportschnecken zum Einhalten eines definierten Abstandes zwischen den einzelnen Aufgußbeuteln. Zur Unterstützung der Ausrichtung der Substanzquanten in den Aufgußbeuteln sind vorteilhafterweise Rütteleinrichtungen vorgesehen, die in periodischen Abständen die gestapelten Aufgußbeutel zum Ausrichten der Substanzquanten in Rüttelbewegungen versetzen. Durch die Transportschnecken wird zwischen den zu stapelnden Aufgußbeuteln ein Abstand erzeugt, welcher im weiteren Verlauf des Verfahrens zum Zusammenstellen einer vorgegebenen Anzahl von Aufgußbeuteln zu einem Aufgußbeutelstapel verwendet wird. Um die Aufgußbeutel aus dem Bereich des Fächerrades zu bewegen, weist die Transportschnecke im Bereich des Fächerrades eine größere Steigung auf.

Weitere Merkmale des erfindungsgemäßen Verfahrens und der erfindungsgemäßen Vorrichtung ergeben sich aus den Unteransprüchen.

Einzelheiten und Vorteile der Erfindung werden nachfolgend anhand eines in den Figuren dargestellten Ausführungsbeispiels näher erläutert. Dabei zeigen:
- Fig. 1: ein schematisches Ausführungsbeispiel einer Vorrichtung zur Durchführung des erfindungsgemäßen Verfahrens und
- Fig. 2: in einer perspektivischen Ansicht einen Teil der Vorrichtung gemäß Fig. 1.

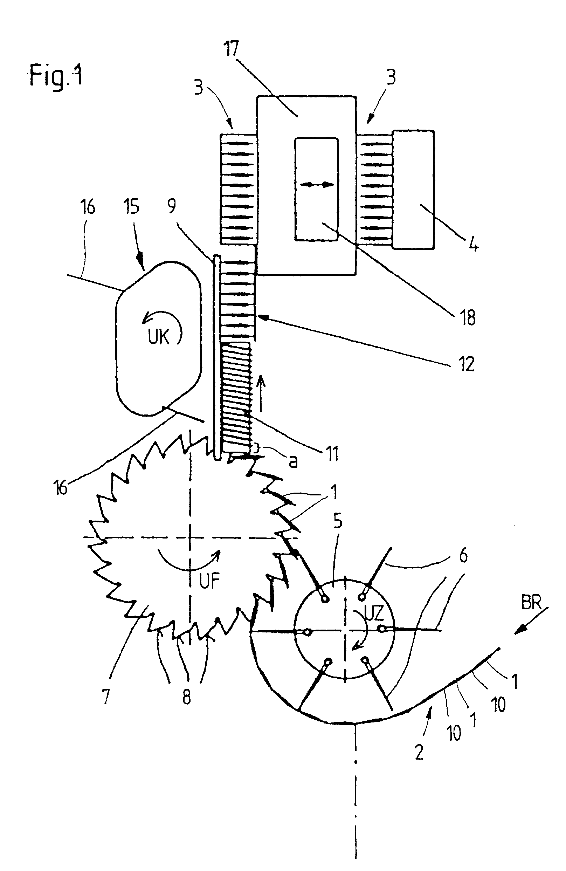

Fig. 1 zeigt ein Schema einer Vorrichtung zum Stapeln und gruppenweisen Verpacken von Aufgußbeuteln 1 zur Bereitung von Tee. Die Aufgußbeutel 1 bestehen aus einer Aufhängung aus bahnförmigem Trägermaterial, welche beidseitig mit allseitig geschlossenen, mindestens ein Substanzquantum enthaltenden und mit der Aufhängung verbundenen Kammem versehen ist. Im Rahmen einer kontinuierlichen Herstellung werden die Aufgußbeutel 1 in Form eines Aufgußbeutelstrangs 2 der Vorrichtung zum Stapeln und gruppenweisen Verpacken kontinuierlich zugeführt. Der Aufgußbeutelstrang 2 besteht aus hintereinander in Reihe angeordneten Aufgußbeuteln 1, die über das zur Handhabung und Aufhängung des Aufgußbeutels 1 dienende bahnförmige Trägermaterial miteinander verbunden sind. Zum Separieren der Aufgußbeutel ist das bahnförmige Trägermaterial im Bereich der Verbindung mit den Kammern des Aufgußbeutels 1 querperforiert.

Im Anschluß an eine kontinuierliche Herstellung der Aufgußbeutel 1 wird der Aufgußbeutelstrang 2 einem kontinuierlich umlaufenden Zangenrad 5 zugeführt, wobei das die Aufhängung ausbildende Trägermaterial eines Aufgußbeutels 1 des Aufgußbeutelstrangs 2 von am Zangenrad 5 angeordneten Zangen 6 ergriffen und durch Relativbewegung der Zangen 6 zu dem Zangenrad 5 der Aufgußbeutelstrang 2 an der Querperforation 10 auseinandergezogen wird. Die Zangen 6 greifen das Trägermaterial des Aufgußbeutels 1 dabei im Bereich der Verbindung der Kammern des Aufgußbeutels 1 mit dem Trägermaterial. Zum Separieren der Aufgußbeutel 1 vom Aufgußbeutelstrang 2 werden die in Umlaufrichtung UZ des Zangenrades 5 vorderen Zangen 6 zum Erzeugen einer Relativbewegung in Umlaufrichtung UZ beschleunigt, wenn die in Umlaufrichtung UZ nachfolgenden Zangen 6 das Trägermaterial des nachfolgenden Aufgußbeutels 1 gegriffen haben. Sowohl die Erzeugung der Relativbewegung als auch das Greifen der Zangen 6 wird über separate, aufeinander abgestimmte Kurven gesteuert.

Die so separierten Aufgußbeutel 1 werden von den Zangen 6 des Zangenrades 5 in taschenartigen Aufnahmen 8 auf dem Umfang eines Fächerrades 7 abgelegt. Dabei werden die. Aufgußbeutel 1 in den taschenartigen Aufnahmen 8 des Fächerrades 7 durch Ansaugung mittels Unterdruck unterstützend gehalten. Zum Anpassen der Geschwindigkeit der Aufgußbeutel 1 vom Zangenrad 5 zum Fächerrad 7 wird die Bewegung der Zangen 6 nach dem Beschleunigen in Umlaufrichtung UZ des Zangenrades 5 über die Kurvensteuerung rückgeführt und die Geschwindigkeit der Aufgußbeutel 1 verringert, so daß die Übergabe ohne nennenswerte Erschütterung erfolgt.

Durch die Kombination von Zangenrad und Fächerrad wird nicht nur die Bewegungsgeschwindigkeit der Aufgußbeutel 1 verringert, sondern die Aufgußbeutel 1 in eine zur Stapelbildung geeignete Position gebracht. Dabei werden die im Rahmen einer kontinuierlichen Herstellung mit hoher Geschwindigkeit hintereinander ankommenden Aufgußbeutel 1 in den Aufnahmen 8 des Fächerrades 7 derart angeordnet, daß sich die Aufgußbeutel 1 in ihrer anschließenden Bewegungsrichtung wenigstens teilweise überlappen. Die anschließende Bewegungsrichtung der Aufgußbeutel 1 entspricht dabei der Umlaufrichtung UF des Fächerrades 7. Durch die Kombination des Zangenrades 5 mit dem Fächerrad 7 wird so der Abstand zwischen den Aufgußbeuteln 1 reduziert und durch das Fächerrad 7 die Geschwindigkeit der Aufgußbeutel 1 verringert. Durch die taschenartig ausgebildeten Aufnahmen 8 stehen die Aufgußbeutel 1 im wesentlichen radial. So lassen sich über den Umfang des Fächerrades 7 mehr Aufgußbeutel aufnehmen, als bei der Anordnung der Aufgußbeutel 1 hintereinander in Reihe entsprechend dem Aufgußbeutelstrang 2. Die Geschwindigkeit des Fächerrades 7 kann damit reduziert werden, da in gleicher Zeit in Abhängigkeit von der Überlappung mehr Aufgußbeutel 1 ankommen. Die reduzierte Geschwindigkeit gewährleistet dabei, daß eine gute Egalisierung und Verdichtung der in den Aufgußbeuteln verpackten Substanzquanten erhalten bleibt.

Bei der Übergabe der Aufgußbeutel 1 vom Zangenrad 5 zum Fächerrad 7 stellen die auf dem äußeren Umfang des Fächerrades 7 ausgebildeten taschenartigen Aufnahmen 8 eine Ablage für die Aufgußbeutel 1 dar, auf welcher die Aufgußbeutel 1 durch die Rückbewegung der Zangen 6 des Zangenrades 5 praktisch ohne nennenswerten Aufprall abgelegt werden. Die Rückbewegung der Zangen 6 des Zangenrades 5 paßt dabei die Aufgußbeutelgeschwindigkeit der Umlaufgeschwindigkeit des Fächerrades 7 an, die geringer ist als die Geschwindigkeit des Aufgußbeutelstrangs 2. Dadurch wird weiter sichergestellt, daß die Substanzquanten im Inneren der Kammern der Aufgußbeutel 1 gleichmäßig verteilt bleiben.

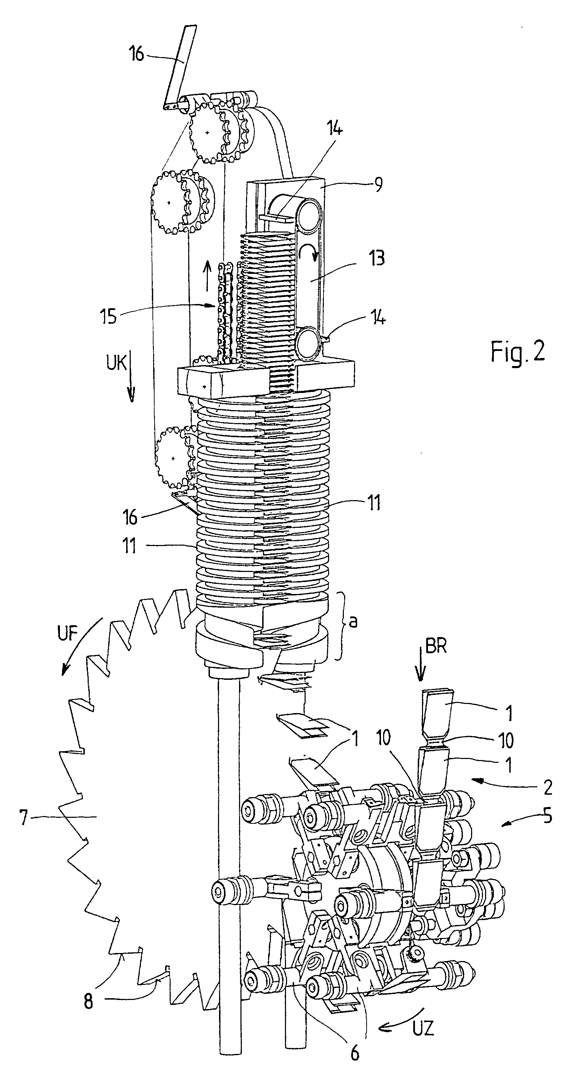

Beim Umlaufen des Fächerrades 7 werden die Aufgußbeutel 1 über eine beiderseits seitlich des Fächerrades 7 angeordnete Schienenablage 9 aus den Aufnahmen 8 des Fächerrades 7 entnommen. Aufgrund der geringen Geschwindigkeit des Fächerrades 7 werden die Aufgußbeutel 1 beim Umlaufen des Fächerrades 7 von der Schienenablage 9 ohne nennenswerten Aufprall zurückgehalten. Senkrecht zur Umlaufrichtung UF des Fächerrades 7 sind beiderseits des Fächerrades 7 im unteren Bereich der Schienenablage 9 Transportschnecken 11 angeordnet, die die Aufgußbeutel 1 kontinuierlich weitertransportieren. Die Transportschnecken 11 weisen dazu in dem in den Fig. 1 und 2 mit a gekennzeichneten Bereich eine größere Steigung auf, um die Aufgußbeutel 1 schnellstmöglich aus dem Einzugsbereich des Fächerrades 7 zu befördern.

Über die Transportschnecken 11 werden die Aufgußbeutel 1 entlang der Schienenablage 9 in einem Schacht 12 gestapelt. Die Seitenwände des Schachtes 12 sind vorliegend über seitlich der Schienenablage 9 oberhalb der Transportschnecken 11 angeordnete Nockenbänder 13 mit Nocken 14 ausgebildet, die mittels Servomotoren gesteuert werden.

In Umlaufrichtung UF hinter der Schienenablage 9 sind an einem umlaufenden Kettenantrieb 15 Mitnehmer 16 angeordnet, welche beim Umlaufen des Kettenantriebs 15 durch einen Spalt in der Schienenablage 9 zwischen die von den Transportschnecken 11 transportierten Aufgußbeutel 1 eingreifen. Der Kettenantrieb 15 ist dabei derart gesteuert, daß die Mitnehmer 16 die Aufgußbeutel in einer vorgegebenen Anzahl im Schacht 12 zusammenstellen. Die Mitnehmer 16 werden über den Kettenantrieb 15 parallel zu den mittels der Transportschnecken 11 im Schacht 12 angeordneten Aufgußbeutel 1 mit gleicher Geschwindigkeit bewegt. Bei einer vorbestimmten Anzahl an Aufgußbeuteln 1, welche über Sensoreinrichtungen erfaßt wird, greift der über den mittels Servomotoren gesteuerten Kettenantrieb 15 bewegte Mitnehmer 16 in die gestapelten Aufgußbeutel ein und stellt so einen Aufgußbeutelstapel 3 vorgegebener Anzahl zusammen. Ab Eingriff des. Mitnehmers 16 in den Stapel der Aufgußbeutel 1 wird der. Kettenantrieb 15 beschleunigt, so daß der Mitnehmer 16 einen Aufgußbeutelstapel vorgegebener Anzahl einem mit einem Transportband versehenen Magazin 17 zuführt, von welchem aus der Aufgußbeutelstapel 3 über einen Stößel 18 in ein Verpackungsbehältnis 4 eingestoßen wird. Die Nockenbänder 13 sind mittels Servomotoren derart gesteuert, daß bei Eingriff des Mitnehmers 16 in den im Schacht 12 angeordneten Stapel der Aufgußbeutel 1 die Nockenbänder 13 beschleunigt werden, um zu verhindem, daß die Nocken 14 der Nockenbänder 13 den von dem Mitnehmer 16 in Verpackungsposition zu bringende Aufgußbeutelstapel 3 in seiner Bewegung behindern. Gleichzeitig erleichtern die Nocken 14 der Nockenbänder 13 des Schachtes 12.die Stapelung von Aufgußbeuteln 1 im Schacht 12, da die Nocken 14 gleichmäßig mit dem wachsenden Stapel mitgeführt werden. Auf diese Art und Weise wird ein Verkanten der Aufgußbeutel 1 im Schacht 12 verhindert.

Das in den Figuren dargestellte Ausführungsbeispiel dient lediglich der Erläuterung der Erfindung und ist für diese nicht beschränkend. So kann alternativ die Befüllung des Verpackungsbehältnisses 4 auch von der Längsseite her erfolgen und der Mitnehmer 16 über eine oszillierende in den Schacht 12 eingreifende Bewegung einen Aufgußbeutelstapel 3 vorgegebener Anzahl an Aufgußbeuteln 1 erfassen und einer Einstößeinrichtung zuführen.

### Bezugszeichenliste

- 1: Aufgußbeutel
- 2: Aufgußbeutelstrang
- 3: Aufgußbeutelstapel
- 4: Verpackungsbehältnis
- 5: Zangenrad
- 6: Zange
- 7: Fächerrad
- 8: Aufnahme
- 9: Schienenablage
- 10: Querperforation
- 11: Transportschnecke
- 12: Schacht
- 13: Nockenband
- 14: Nocke
- 15: Kettenantrieb
- 16: Mitnehmer
- 17: Magazin
- 18: Stößel
- a: Bereich größerer Steigung
- UZ: Umlaufrichtung Zangenrad
- UF: Umlaufrichtung Fächerrad
- UK: Umlaufrichtung Kettenantrieb
- BR: Bewegungsrichtung Aufgußbeutel

## Patentansprüche

1. Verfahren zum Stapeln und gruppenweisen Verpacken von Aufgußbeuteln (1), insbesondere zur Bereitung von Tee, die in einer vorgegebenen Anzahl zu einem Aufgußbeutelstapel (3) zusammengestellt und in ein in einer vorgegebenen Position bereitgestelltes Verpackungsbehältnis (4) eingeführt werden,
**dadurch gekennzeichnet,**
**daß** die im Rahmen einer kontinuierlichen Herstellung hintereinander in Reihe mit einem bahnförmigen Trägermaterial zu einem Strang (2) verbundenen Aufgußbeutel (1) dadurch separiert werden, daß die Längsseiten eines von dem Strang (2) zu separierenden Aufgußbeutels nahe einer ausgebildeten Perforation (10) mittels seitlich eines kontinuierlich umlaufenden Zangenrades (5) angeordneten Zangen (6) ergriffen und der Aufgußbeutel entlang der Perforation (10) durch eine Relativbewegung der Zangen (6) zum Zangenrad (5) abgetrennt wird,
**daß** die Bewegungsgeschwindigkeit der separierten Aufgußbeutel (1) anschließend dadurch verringert wird, daß die Aufgußbeutel (1) in taschenartige Aufnahmen (8) auf dem äußeren Umfang eines Fächerrades (7) abgelegt werden, das mit geringerer Geschwindigkeit als die Zuführgeschwindigkeit der einzelnen Aufgußbeutel kontinuierlich umläuft,
und **daß** die sich zumindest teilweise überlappenden Aufgußbeutel (1) mittels einer seitlich des Fächerrades (7) angeordneten Schienenablage (9) vom Fächerrad (7) in einen Schacht (12) überführt werden, aus dem sie in vorgegebener Anzahl zum Aufgußbeutelstapel (3) zusammengefaßt dem Verpackungsbehältnis (4) zugeführt werden.

2. Verfahren nach Anspruch 1, **dadurch gekennzeichnet, daß** die schwenkbaren Zangen (6) zum Erzeugen der Relativbewegung derart bewegt werden, daß die in Umlaufrichtung (UZ) vorderen Zangen (6) beschleunigt werden, wenn sie einen abzutrennenden Aufgußbeutel (1) ergriffen haben, während die in Umlaufrichtung (UZ) nachfolgenden Zangen (6) den nachfolgenden Aufgußbeutel (1) ergreifen.

3. Verfahren nach Anspruch 1 und 2, **dadurch gekennzeichnet, daß** die Zangen (6) durch eine Kurvensteuerung gesteuert werden.

4. Verfahren nach einem der vorhergehenden Ansprüche, **dadurch gekennzeichnet, daß** zum Zusammenstellen von Aufgußbeuteln (1) in einer vorgegebenen Anzahl zum Aufgußbeutelstapel (3) ein in die in dem Schacht (12) beabstandet voneinander gestapelten Aufgußbeuteln (1) eingreifender Mitnehmer (16) verwendet wird, der entsprechend der vorgegebenen Anzahl der zu verpackenden Aufgußbeutel (1) in den Schacht (12) eingreift und den Aufgußbeutelstapel (3) in eine zum Einführen in das bereitgestellte Verpackungsbehältnis (4) vorgesehene Position bringt.

5. Verfahren nach Anspruch 4, **dadurch gekennzeichnet, daß** der Mitnehmer (16) eine kontinuierlich rotierende Bewegung ausführt.

6. Verfahren nach Anspruch 4, **dadurch gekennzeichnet, daß** der Mitnehmer (16) eine lineare oszillierende Bewegung ausführt.

7. Vorrichtung zur Durchführung des Verfahrens gemäß einem der Ansprüche 1 bis 6, mit einem kontinuierlich umlaufenden Fächerrad (7), dem die vereinzelten Aufgußbeutel (1) zugeführt und in einer radial zum Fächerrad (7) verlaufenden Führung in Stapeln vorgegebener Anzahl hintereinander liegend mit einer Verpackung versehen werden,
**dadurch gekennzeichnet,**
**daß** vor dem Fächerrad (7) ein mit Zangen (6) versehenes, ebenfalls kontinuierlich umlaufendes Zangenrad (5) angeordnet ist, dessen seitlich des Zangenrades (5) angeordnete Zangen (6) zum Ergreifen der Längsseiten jeweils eines an einem bahnförmigen Trägermaterial befestigten und vom Strang (2) zu separierenden Aufgußbeutels (1) an einer vorbestimmten Position ausgebildet und zum Erzeugen einer Relativbewegung zum Rad (5) in Umlaufrichtung des Zangenrades (5) beschleunigbar sind, wobei das Zangenrad (5) dem mit geringerer Umlaufgeschwindigkeit umlaufenden Fächerrad (7) zugeordnet ist.

8. Vorrichtung nach Anspruch 7, **dadurch gekennzeichnet, daß** die Zangen (6) in Umlaufrichtung des Zangenrades (5) schwenkbar sind.

9. Vorrichtung nach Anspruch 7 und 8, **dadurch gekennzeichnet, daß** die Zangen (6) zum Erzeugen der Relativbewegung in Umlaufrichtung (UZ) des Zangenrades (5) durch eine Kurvensteuerung beschleunigbar sind.

10. Vorrichtung nach Anspruch 7 bis 9, **dadurch gekennzeichnet, daß** die taschenartigen Aufnahmen (8) des Fächerrades (7) mit einer Ansaugvorrichtung für die Aufgußbeutel (1) versehen sind.

11. Vorrichtung nach einem der Ansprüche 7 bis 10, **dadurch gekennzeichnet, daß** seitlich des Fächerrades (7) eine Schienenablage (9) angeordnet ist, welche beim Umlaufen des Fächerrades die in den taschenartigen Aufnahmen (8) des Fächerrades (7) abgelegten Aufgußbeutel (1) zurückhält, so daß diese einem Schacht (12) zuführbar sind.

12. Vorrichtung nach Anspruch 11, **dadurch gekennzeichnet, daß** wenigstens im Bereich einer der Längsseiten der Aufgußbeutel (1) eine Transportschnecke (11) angeordnet ist, die die Aufgußbeutel (1) in den Schacht transportiert.

13. Vorrichtung nach Anspruch 12, **dadurch gekennzeichnet, daß** die Transportschnecke (11) im Bereich des Fächerrades (7) eine größere Steigung (a) aufweist.

14. Vorrichtung nach einem der Ansprüche 11 bis 13, **dadurch gekennzeichnet, daß** der Schacht (12) mit Rütteleinrichtungen versehen ist, über welche in periodischen Abständen die im Schacht (12) gestapelten Aufgußbeutel (1) in Bewegung versetzbar sind.

15. Vorrichtung nach mindestens einem der Ansprüche 11 bis 14, **gekennzeichnet durch** einen in den Schacht (12) eingreifenden Mitnehmer (16) zum Zusammenstellen eines Aufgußbeutelstapels (3) mit einer vorgegebenen Anzahl an Aufgußbeuteln (1).

16. Vorrichtung nach Anspruch 15, **dadurch gekennzeichnet, daß** der Mitnehmer (16) kontinuierlich rotierend bewegbar ist.

17. Vorrichtung nach Anspruch 15, **dadurch gekennzeichnet, daß** der Mitnehmer (16) linear oszillierend bewegbar ist.

18. Vorrichtung nach einem der Ansprüche 15 bis 17, **dadurch gekennzeichnet, daß** der Aufgußbeutelstapel (3) über den Mitnehmer (16) in das Verpackungsbehältnis (4) einbringbar ist.

19. Vorrichtung nach einem der Ansprüche 15 bis 17, **dadurch gekennzeichnet, daß** der Aufgußbeutelstapel (3) über den Mitnehmer (16) einem Stößel (18) zuführbar ist, über welchen der Aufgußbeutelstapel (3) in das Verpackungsbehältnis (4) überführbar ist.

## Claims

1. Method for stacking and packaging infusion bags (1) in groups, especially for making tea, which bags are assembled in a predetermined number to form an infusion bag stack (3) and introduced into a packaging container (4) which is placed in readiness in a predetermined position,
**characterised in that** the infusion bags (1), which are joined together in the course of a continuous manufacturing process in series with a web-shaped carrier material to form a strand (2), are separated by gripping the longitudinal sides of an infusion bag which is to be separated from the strand (2) near a formed perforation (10) by means of tongs (6) disposed at the side of a continuously rotating tong wheel (5), and the infusion bag is separated along the perforation (10) by a movement of the tongs (6) relative to the tong wheel (5),
that the speed of movement of the separated infusion bags (1) is then decreased by depositing the infusion bags (1) in pocket-like receptacles (8) at the outer circumference of a fan-type wheel (7) which continuously rotates at a lower speed than the feed speed of the individual infusion bags,
and that the infusion bags (1), which overlap at least in part, are transferred by means of a rail deposit device (9), which is disposed at the side of the fan-type wheel (7), from the fan-type wheel (7) into a shaft (12), from which, having been combined in a predetermined number to form the infusion bag stack (3), they are fed to the packaging container (4).

2. Method according to Claim 1, **characterised in that** the pivotable tongs (6) are moved to produce the relative movement such that the tongs (6) which lead in the direction of rotation (UZ) are accelerated after having gripped an infusion bag (1) which is to be separated, while the tongs (6) which follow in the direction of rotation (UZ) grip the succeeding infusion bag (1).

3. Method according to Claims 1 and 2, **characterised in that** the tongs (6) are controlled by a cam control system.

4. Method according to any one of the preceding Claims, **characterised in that** a dog (16), which engages in the infusion bags (1) stacked at spacings in the shaft (12), is used to assemble infusion bags (1) in a predetermined number to form the infusion bag stack (3), which dog engages in the shaft (12) according to the predetermined number of infusion bags (1) which are to be packaged and brings the infusion bag stack (3) into a position which is specified for the introduction into the packaging container (4) which has been placed in readiness.

5. Method according to Claim 4, **characterised in that** the dog (16) executes a continuously rotating movement.

6. Method according to Claim 4, **characterised in that** the dog (16) executes a linear oscillating movement.

7. Apparatus for carrying out the method according to any one of Claims 1 to 6, with a continuously rotating fan-type wheel (7), to which the detached infusion bags (1) are fed, which bags, lying one behind the other in stacks of a predetermined number, are provided with a packaging in a guide extending radially to the fan-type wheel (7),
**characterised in that** a tong wheel (5), which is provided with tongs (6) and also rotates continuously, is disposed before the fan-type wheel (7), the tongs (6) of which wheel, being disposed at the side of the tong wheel (5), are formed to grip the longitudinal sides of a respective infusion bag (1), which is fastened to a web-shaped carrier material and is to be separated from the strand (2), at a predetermined position and to produce a movement relative to the wheel (5) in the direction of rotation of the tong wheel (5), wherein the tong wheel (5) is associated with the fan-type wheel (7) rotating at a lower rotational speed.

8. Apparatus according to Claim 7, **characterised in that** the tongs (6) can be pivoted in the direction of rotation of the tong wheel (5).

9. Apparatus according to Claims 7 and 8, **characterised in that** the tongs (6) can be accelerated to produce the relative movement in the direction of rotation (UZ) of the tong wheel (5) by a cam control system.

10. Apparatus according to Claims 7 to 9, **characterised in that** the pocket-like receptacles (8) of the fan-type wheel (7) are provided with a suction apparatus for the infusion bags (1).

11. Apparatus according to any one of Claims 7 to 10, **characterised in that** a rail deposit device (9) is disposed at the side of the fan-type wheel (7), which device retains the infusion bags (1) deposited in the pocket-like receptacles (8) of the fan-type wheel (7) when the latter rotates, so that these bags can be fed to a shaft (12).

12. Apparatus according to Claim 11, **characterised in that** a screw conveyor (11), which conveys the infusion bags (1) into the shaft, is disposed at least in the region of one of the longitudinal sides of the infusion bags (1).

13. Apparatus according to Claim 12, **characterised in that** the screw conveyor (11) has a greater pitch (a) in the region of the fan-type wheel (7).

14. Apparatus according to any one of Claims 11 to 13, **characterised in that** the shaft (12) is provided with vibrating devices via which the infusion bags (1) which are stacked in the shaft (12) can be periodically put into motion.

15. Apparatus according to at least one of Claims 11 to 14, **characterised by** a dog (16) which engages in the shaft (12) to assemble an infusion bag stack (3) with a predetermined number of infusion bags (1).

16. Apparatus according to Claim 15, **characterised in that** the dog (16) can be moved in continuously rotating fashion.

17. Apparatus according to Claim 15, **characterised in that** the dog (16) can be moved in linear oscillating fashion.

18. Apparatus according to any one of Claims 15 to 17, **characterised in that** the infusion bag stack (3) can be introduced into the packaging container (4) by the dog (16).

19. Apparatus according to any one of Claims 15 to 17, **characterised in that** the infusion bag stack (3) can be fed by the dog (16) to a ram (18), via which the infusion bag stack (3) can be transferred into the packaging container (4).

## Revendications

1. Procédé d'empilage et d'emballage par groupes de sachets pour infusion (1), en particulier pour la préparation de thé, qui sont rassemblés dans un nombre déterminé pour former une pile de sachets pour infusion et qui sont introduits dans un récipient d'emballage (4) préparé dans une position prédéterminée,
**caractérisé en ce que**
les sachets pour infusion (1) reliés, dans le cadre d'une fabrication continue, les uns derrière les autres en rangée avec un matériau-support en forme de ruban pour former un brin (2) sont séparés par le fait que les côtés longitudinaux d'un sachet pour infusion à séparer du brin (2) sont saisis à proximité d'une perforation (10) existante, au moyen de pinces (6) agencées latéralement à une roue à pinces (5) en rotation continue et que le sachet pour infusion est détaché le long de la perforation (10) par un mouvement relatif des pinces (6) par rapport à la roue à pinces (5),
**en ce que** la vitesse de mouvement des sachets pour infusion (1) séparés est ensuite réduite par le fait que les sachets pour infusion (1) sont déposés dans des logements en forme de poches (8) sur la périphérie extérieure d'une roue en éventail (7) qui tourne de manière continue avec une vitesse plus faible que la vitesse d'amenée des sachets pour infusion individuels, et **en ce que** les sachets pour infusion (1) qui se chevauchent au moins partiellement sont amenés au récipient d'emballage (4), au moyen d'un récepteur sur rail (9) agencé latéralement à la roue en éventail (7), depuis la roue en éventail (7) jusque dans un puits (12) hors duquel ils sont rassemblés dans un nombre prédéterminé pour former la pile (3) de sachets pour infusion.

2. Procédé selon la revendication 1, **caractérisé en ce que** pour engendrer le mouvement relatif, les pinces (6) pivotantes sont déplacées de telle sorte que les pinces (6) situées à l'avant en direction de rotation (UZ) sont accélérées lorsqu'elles ont saisi un sachet pour infusion (1) à détacher tandis que les pinces (6) suivantes en direction de rotation (UZ) saisissent le sachet pour infusion (1) suivant.

3. Procédé selon les revendications 1 et 2, **caractérisé en ce que** les pinces (6) sont commandées par une commande à cames.

4. Procédé selon l'une des revendications précédentes, **caractérisé en ce que** pour rassembler des sachets pour infusion (1) dans un nombre prédéterminé pour former la pile (3) de sachets pour infusion, on utilise un toc d'entraînement (16) s'engageant dans les sachets pour infusion (1) empilés dans le puits (12) à distance les uns des autres, qui s'engage dans le puits (12) en correspondance du nombre prédéterminé des sachets pour infusion (1) à emballer et qui amène la pile de sachets pour infusion (1) dans une position prévue pour être introduite dans le récipient d'emballage (4) préparé.

5. Procédé selon la revendication 4, **caractérisé en ce que** le toc d'entraînement (16) exécute un mouvement de rotation continu.

6. Procédé selon la revendication 4, **caractérisé en ce que** le toc d'entraînement (16) exécute un mouvement de rotation linéaire oscillant.

7. Dispositif pour mettre en oeuvre le procédé selon l'une des revendications 1 à 6, comportant une roue en éventail (7) tournant en continu, à laquelle sont amenés les sachets pour infusion (1) individuels qui, couchés les uns derrière les autres en piles d'un nombre prédéterminé dans un guidage s'étendant radialement à la roue en éventail (7), sont pourvus d'un emballage,
**caractérisé en ce que**
en amont de la roue en éventail (7) est agencée une roue à pince (5) pourvue de pinces (6) et tournant également en continu, dont les pinces (6) agencées latéralement à la roue à pinces (5) sont réalisées en une position prédéterminée pour saisir les côtés longitudinaux d'un sachet pour infusion (1) respectif fixé sur un matériau-support en forme de ruban et à séparer du brin (2), et peuvent être accélérées pour engendrer un mouvement relatif à la roue (5) en direction de rotation de la roue à pinces (5), la roue à pinces (5) étant associée à la roue en éventail (7) tournant avec une vitesse de rotation plus faible.

8. Dispositif selon la revendication 7, **caractérisé en ce que** les pinces (6) peuvent être pivotées en direction de rotation de la roue à pinces (5).

9. Dispositif selon les revendications 7 et 8, **caractérisé en ce que** pour engendrer le mouvement relatif en direction de rotation (UZ) de la roue à pinces (5), les pinces (6) peuvent être accélérées par une commande à cames.

10. Dispositif selon les revendications 7 à 9, **caractérisé en ce que** les logements (8) en forme de poches de la roue en éventail (7) sont pourvus d'un dispositif de succion pour les sachets pour infusion (1).

11. Dispositif selon l'une des revendications 7 à 10, **caractérisé en ce que** latéralement à la roue en éventail (7) est agencé un récepteur sur rail (9) qui, lors de la rotation de la roue en éventail, retient les sachets pour infusion (1) déposés dans les logements en forme de poches (8) de la roue en éventail (7), de sorte que ceux-ci peuvent être amenés à un puits (12).

12. Dispositif selon la revendication 11, **caractérisé en ce qu'**au moins dans la région d'un des côtés longitudinaux des sachets pour infusion (1) est agencée une vis transporteuse (11) qui transporte les sachets pour infusion (1) jusque dans le puits.

13. Dispositif selon la revendication 12, **caractérisé en ce que** la vis transporteuse (11) présente une pente (a) plus forte dans la région de la roue en éventail (7).

14. Dispositif selon l'une des revendications 11 à 13, **caractérisé en ce que** le puits (12) est pourvu de systèmes à secousses via lesquels on peut mettre en mouvement à des intervalles périodiques les sachets pour infusion (1) empilés dans le puits (12).

15. Dispositif selon au moins l'une des revendications 11 à 14, **caractérisé par** un toc d'entraînement (16) s'engageant dans le puits (12) pour rassembler une pile (3) de sachets pour infusion avec un nombre prédéterminé de sachets pour infusion (1).

16. Dispositif selon la revendication 15, **caractérisé en ce que** le toc d'entraînement (16) est mobile en rotation continue.

17. Dispositif selon la revendication 15, **caractérisé en ce que** le toc d'entraînement (16) est mobile de manière linéaire oscillante.

18. Dispositif selon l'une des revendications 15 à 17, **caractérisé en ce que** la pile (3) de sachets pour infusion peut être introduite par le toc d'entraînement (16) jusque dans le récipient d'emballage (4).

19. Dispositif selon l'une des revendications 15 à 17, **caractérisé en ce que** la pile (3) de sachets pour infusion peut être amenée par le toc d'entraînement (16) à un poussoir (18) par l'intermédiaire duquel la pile (3) de sachets pour infusion peut être transférée jusque dans le récipient d'emballage (4).
